# EUROPÄISCHE PATENTSCHRIFT

(11) **EP 3 073 200 B1**
(45) Veröffentlichungstag und Bekanntmachung des Hinweises auf die Patenterteilung: **28.03.2018**
(21) Anmeldenummer: 16162646.0
(22) Anmeldetag: 29.03.2016
(51) Int. Cl.: F24D 3/08, F24D 3/10, F24D 19/10

(54) **BEHEIZTE HYDRAULISCHE WEICHE ZUR OPTIMIERTEN EINBINDUNG VON FREMDWÄRME**
HEATED HYDRAULIC SWITCH FOR OPTIMIZED INTEGRATION OF EXTERNAL HEAT
AIGUILLAGE HYDRAULIQUE CHAUFFE DESTINE A L'INTEGRATION DE CHALEUR EXTERNE

(30) Priorität: 27.03.2015 DE 102015205646
(43) Veröffentlichungstag der Anmeldung: 28.09.2016
(73) Patentinhaber: ROBERT BOSCH GMBH, 70442 Stuttgart (DE)
(72) Erfinder: Stumpp, Hermann, 73730 Esslingen (DE)

(56) Entgegenhaltungen:
- EP-A2- 1 398 591
- DE-A1-102009 051 782
- DE-U1-202006 019 415

## Beschreibung

Die vorliegende Erfindung betrifft ein Heizsystem, welches mindestens einen Primärwärmeerzeuger, mindestens einen Heizkreis und mindestens einen Fremdwärmeerzeuger umfasst, wobei der mindestens eine Fremdwärmeerzeuger über mindestens eine hydraulische Weiche mit dem mindestens einen Heizkreis gekoppelt ist.

### Stand der Technik

Die DE 103 40 891 A1 offenbart eine Heizungsanlage, welche über ein Brennstoffzellenheizgerät, einen Heizkreis und ein Zusatzheizgerät verfügt. Dabei ist das Zusatzheizgerät über eine hydraulische Weiche mit dem Heizkreis gekoppelt.

Die DE 10 2009 051 782 A1 offenbart eine Heizungsanlage nach dem Oberbegriff des Anspruchs 1.

### Offenbarung der Erfindung

Die vorliegende Erfindung betrifft ein Heizsystem nach Anspruch 1, wobei mindestens ein Temperatursensor in und/oder an der mindestens einen hydraulischen Weiche angeordnet ist. So wird eine Temperaturmessung unmittelbar an der hydraulischen Weiche ermöglicht, welche einen Rückschluss auf eine an das mindestens eine Heizsystem gestellte Wärmeanforderung ermöglicht.

Durch die in den Unteransprüchen aufgeführten Merkmale sind vorteilhafte Weiterentwicklungen der Erfindung möglich. So ist es Vorteilhaft, wenn der mindestens eine Temperatursensor bezogen auf eine Strömung im Heizkreis in und/oder an einer stromabwärtigen Seite der mindestens einen hydraulischen Weiche angeordnet ist, wodurch besonders effektiv ermittelt werden kann ob eine Wärmeabnahme innerhalb des Heizkreises erfolgt.

In einer vorteilhaften Ausführung ist mindestens ein Drei-Wege-Ventil, insbesondere in mindestens einem Vor- und/oder Rücklauf, angeordnet, welches dazu vorgesehen ist zwischen einer Erwärmung des mindestens einen Heizkreises, insbesondere über die mindestens eine Weiche, und einer Erwärmung von Brauchwasser umzusteuern, wodurch eine besonders nachhaltige Energienutzung ermöglicht wird.

Vorteilhaft ist es, wenn der mindestens eine Fremdwärmeerzeuger mit mindestens einem Brauchwassererwärmungskreis, insbesondere über mindestens einen Vor- und/oder Rücklauf, verbunden ist, wodurch sowohl eine Erwärmung des mindestens einen Heizkreises, als auch eine Erwärmung von Brauchwasser ermöglicht wird. Erfindungsgemäß weist die mindestens eine hydraulische Weiche mindestens einen integrierten Wärmeübertrager, insbesondere einen Rohrwärmeübertrager, auf, wodurch eine effiziente Wärmeübertragung von und/oder an die mindestens eine hydraulische Weiche ermöglicht wird. Dabei ist die mindestens eine hydraulische Weiche, insbesondere der mindestens eine integrierte Wärmeübertrager, mit dem mindestens einen Brauchwassererwärmungskreis, insbesondere über mindestens einen Vor- und/oder Rücklauf des mindestens einen Brauchwassererwärmungskreises, verbindbar, wodurch eine effiziente Wärmeübertragung zwischen dem mindestens einen Brauchwassererwärmungskreis und der mindestens einen hydraulischen Weiche ermöglicht wird.

Vorteilhaft ist es auch, wenn der mindestens eine Fremdwärmeerzeuger so mit der mindestens einen hydraulischen Weiche verbunden ist, dass mindestens ein Medium des mindestens einen Brauchwassererwärmungskreises durch die mindestens eine hydraulische Weiche und/oder durch den mindestens einen integrierten Wärmetauscher geleitet werden kann, wodurch der mindestens eine Fremdwärmeerzeuger besonders effektiv über die mindestens eine hydraulische Weiche an das mindestens eine Heizsystem gekoppelt werden kann.

In einer weiteren vorteilhaften Ausführungsform ist der integrierte Wärmeübertrager, vorzugsweise der Rohrwärmeübertrager, mit der mindestens einen hydraulischen Weiche, insbesondere mit einem Inneren der mindestens einen hydraulischen Weiche, vorzugsweise über mindestens eine Öffnung an dem mindestens einen integrierten Wärmeübertrager, hydraulisch verbunden, wodurch eine technisch elegante Kopplung zwischen dem mindestens einen Heizkreis und dem mindestens einen Brauchwassererwärmungskreis geschaffen wird, welche sowohl eine Erwärmung des mindestens einen Heizkreises, als auch eine Erwärmung von Brauchwasser ermöglicht.

Die vorliegende Erfindung betrifft auch ein Verfahren zum Betreiben eines Heizsystems nach Anspruch 7, wobei das Heizsystem mindestens einen Primärwärmeerzeuger, mindestens einen Heizkreis und mindestens einen Fremdwärmeerzeuger umfasst, wobei der mindestens eine Fremdwärmeerzeuger über mindestens eine hydraulische Weiche mit dem mindestens einen Heizkreis gekoppelt ist. Außerdem wird im Verfahren mindestens eine Temperatur in und/oder an der mindestens einen hydraulischen Weiche erfasst, wodurch ein Rückschluss auf eine an das mindestens eine Heizsystem gestellte Wärmeanforderung ermöglicht wird.

Vorteilhaft ist es, wenn mindestens eine Temperaturänderung in und/oder an der mindestens einen hydraulischen Weiche erfasst wird, wodurch besonders effektiv ermittelt werden kann, ob eine Wärmeabnahme innerhalb des Heizkreises erfolgt.

Vorteilhaft ist es, wenn mindestens ein Medium eines Brauchwassererwärmungskreises durch die mindestens eine hydraulische Weiche und/oder durch mindestens einen integrierten Wärmetauscher geleitet wird, wodurch ein Wärmetransport zwischen dem mindestens einen Fremdwärmeerzeuger und der mindestens einen hydraulischen Weiche effizienter wird.

In einer vorteilhaften Ausführung des Verfahrens wird oder bleibt ein einer Erwärmung von Brauchwasser entsprechender Betrieb eingestellt, wenn ein Temperaturanstieg in und/oder an der mindestens einen hydraulischen Weiche erfasst wird und/oder der mindestens eine Temperaturwert betragsmäßig größer ist als mindestens ein Grenzwert, insbesondere von 42 °C, und/oder mindestens eine Rücklauftemperatur des Heizkreises betragsmäßig größer ist als mindestens eine Speichertemperatur eines Brauchwasserspeichers, wodurch ein überhitzen der mindestens einen hydraulischen Weiche vermieden werden kann.

In einer weiteren vorteilhaften Ausführung des Verfahrens wird oder bleibt ein einer Erwärmung von Heizwasser entsprechender Betrieb eingestellt, wenn eine Temperatursenkung in und/oder an der mindestens einen hydraulischen Weiche erfasst wird und/oder der mindestens eine Temperaturwert betragsmäßig kleiner oder gleich mindestens einem Grenzwert, insbesondere von 42 °C, ist und/oder mindestens eine Rücklauftemperatur des Heizkreises betragsmäßig kleiner ist als mindestens eine Speichertemperatur eines Brauchwasserspeichers, wodurch bei dem mindestens einen Heizkreis stets ausreichend Wärme zur Verfügung gestellt werden kann.

Besonders vorteilhaft ist es, wenn ein einer Erwärmung von Brauchwasser entsprechender Betrieb und/oder ein einer Erwärmung von Heizwasser entsprechender Betrieb mittels eines Drei-Wege-Ventils, insbesondere in einem Vor- und/oder Rücklauf, eingestellt wird, wodurch eine besonders effizientes Umschalten zwischen dem einer Erwärmung von Brauchwasser entsprechender Betrieb und/oder ein einer Erwärmung von Heizwasser entsprechender Betrieb ermöglicht wird.

### Zeichnungen

In den Zeichnungen sind Ausführungsbeispiele der Erfindung schematisch dargestellt und in der nachfolgenden Beschreibung näher erläutert. Es zeigen
- Fig. 1: eine schematische Darstellung eines Heizsystems;
- Fig. 2: eine schematische Darstellung eines Heizsystems mit einem Modul zur Einbindung eines Fremdwärmeerzeugers;
- Fig. 3: eine schematische Darstellung eines Ausführungsbeispiels eines erfindungsgemäßen Heizsystems mit einem Modul zur Einbindung eines Fremdwärmeerzeugers.

### Beschreibung

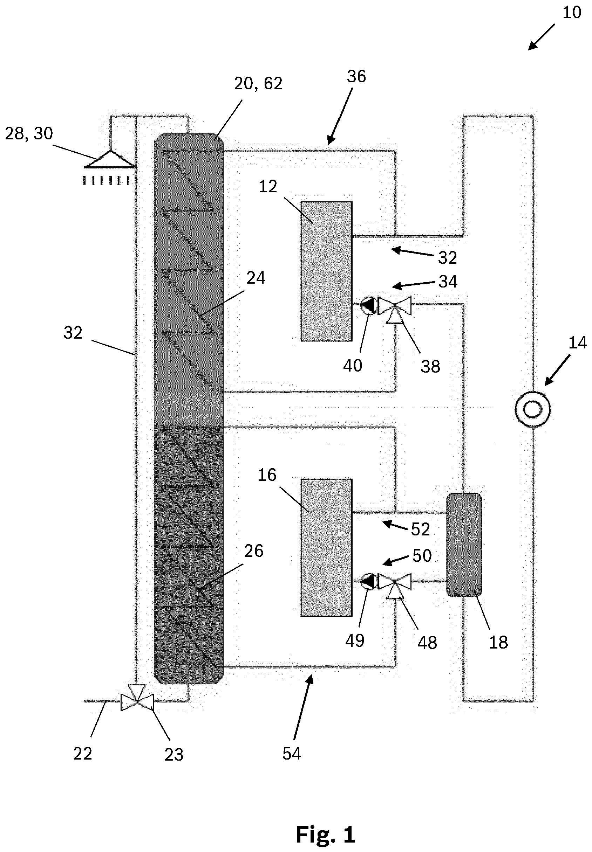

In Fig. 1 ist eine schematische Darstellung eines Heizsystems 10 gezeigt. Das Heizsystem 10 umfasst einen Primärwärmeerzeuger 12, einen Heizkreis 14 und einen Fremdwärmeerzeuger 16, wobei der mindestens eine Fremdwärmeerzeuger 16 über mindestens eine hydraulische Weiche 18 mit dem mindestens einen Heizkreis 14 gekoppelt ist.

Mittels der hydraulischen Weiche 18 erfolgt die Kopplung des Fremdwärmeerzeugers drucklos, d.h. es müssen sowohl regelungstechnisch als auch hydraulisch keine Anpassungen vorgenommen werden. Die Einbindung des Fremdwärmeerzeugers 16 kann somit ohne Rückkopplung auf den Primärwärmeerzeuger 12 erfolgen.

Des Weiteren weist das Heizsystem einen Pufferspeicher 20 auf. Der Pufferspeicher ist dazu vorgesehen Brauchwasser zu speichern. So handelt es sich bei dem Pufferspeicher 20 auch um einen Brauchwasserspeicher 62. Der Pufferspeicher 20 wird bei Bedarf über einen Kaltwasserzulauf 22 mit Kaltwasser befüllt. Die Befüllung des Pufferspeichers 20 wird mittels eines Drei-Wege-Ventils 23 im Kaltwasserzulauf geregelt.

Das Brauchwasser im Pufferspeicher 20 wird in einem entsprechenden Betrieb des Heizsystems durch die Wärme, die mittels des Primärwärmeerzeugers 12 und/oder mittels des Fremdwärmeerzeugers 16 erzeugt wird, erwärmt. So sind innerhalb des Pufferspeichers 20 ein erster Wärmetauscher 24 und ein zweiter Wärmetauscher 26 angeordnet. Der erste Wärmetauscher 24 ist dem Primärwärmeerzeuger 12 zugeordnet, während der zweite Wärmetauscher 26 dem Fremdwärmetauscher 16 zugeordnet ist.

Außerdem ist der Pufferspeicher 20 mit einer Brauchwasserentnahme 28 verbunden, welche in dem gezeigten Ausführungsbeispiel schematisch als ein Duschkopf 30 dargestellt ist. So kann bei einer Brauchwasseranforderung erwärmtes Brauchwasser aus dem Pufferspeicher 20 von einem Verbraucher bezogen werden.

Darüber hinaus ist die Brauchwasserentnahme 28 über eine Bypass-Leitung 32 direkt mit dem Kaltwasserzulauf 22 verbunden. So kann Kaltwasser, nach Wunsch, für einen Verbraucher direkt zur Verfügung gestellt werden oder dem erwärmten Brauchwasser aus dem Pufferspeicher 20 beigemischt werden.

Ferner kann Kaltwasser über eine Bypass-Leitung 32 vom Kaltwasserzulauf 22 zur Brauchwasserentnahme 28 und einem Verbraucher zugeführt werden.

Im gezeigten Ausführungsbeispiel handelt es sich bei dem Primärwärmeerzeuger 12 um eine Gastherme und bei dem Fremdwärmeerzeuger 16 um ein Brennstoffzellensystem, auf Basis von SOFC-Brennstoffzellen. Selbstverständlich ist es aber auch denkbar, dass als Primärwärmeerzeuger 12 und/oder als Fremdwärmeerzeuger 16 auch andere Wärmeerzeuger eingesetzt werden. So könnte beispielsweise auch ein Kaminofen als Fremdwärmeerzeuger 16 fungieren.

In dem gezeigten Ausführungsbeispiel ist der Primärwärmeerzeuger 12 dazu eingerichtet den Grundwärmebedarf weitestgehend abzudecken, während der Fremdwärmeerzeuger 16 - wenn gewünscht - zusätzliche Wärme erzeugen kann. Je nach Wärmeanforderung an das Heizsystem 10, stellt der Primärwärmeerzeuger 12 Wärme für den Heizkreis 14 und/oder für die Erwärmung von Brauchwasser im Pufferspeicher 20 zur Verfügung. So weist der Primärwärmeerzeuger 12 einen Vorlauf 32 und einen Rücklauf 34 zum Transport von Wärme auf. Der Transport von Wärme wird mittels Zirkulation eines Mediums, im gezeigten Fall Heizwasser, bewerkstelligt. Dabei teilt sich der Vorlauf 32 und der Rücklauf 34 jeweils für einen Brauchwassererwärmungskreis 36 und den Heizkreis 14 auf. Mittels eines weiteren Drei-Wege-Ventils 38 und eines Verdichters 40 im Rücklauf 34 wird entsprechend die Zufuhr von im Primärwärmeerzeuger 12 erzeugter Wärme zum Heizkreis 14 und/oder zum Pufferspeicher 20 geregelt.

Der Fremdwärmeerzeuger 16 ist in dem gezeigten Ausführungsbeispiel dazu eingerichtet Wärmespitzen, die durch hohe Wärmeanforderungen an das Heizsystem 10 hervorgerufen werden, auszugleichen.

Alternativ ist es aber auch denkbar, dass der Primärwärmeerzeuger 12 dazu eingerichtet ist Wärmespitzen, die durch hohe Wärmeanforderungen an das Heizsystem 10 hervorgerufen werden, auszugleichen, während der Fremdwärmeerzeuger 16 dazu vorgesehen ist den Grundwärmebedarf weitestgehend abzudecken. Insbesondere bei Verwendung von nicht oder nur teilweise regelbaren Wärmeerzeugern, wie z.B. Kaminöfen, ist es ebenso denkbar, dass in dem Primärwärmeerzeuger 12 und/oder dem Fremdwärmeerzeuger 16 erzeugte Wärme bei geringen Wärmeanforderungen im Pufferspeicher 20 gespeichert wird und bei Bedarf wieder aus dem Pufferspeicher 20 bezogen wird.

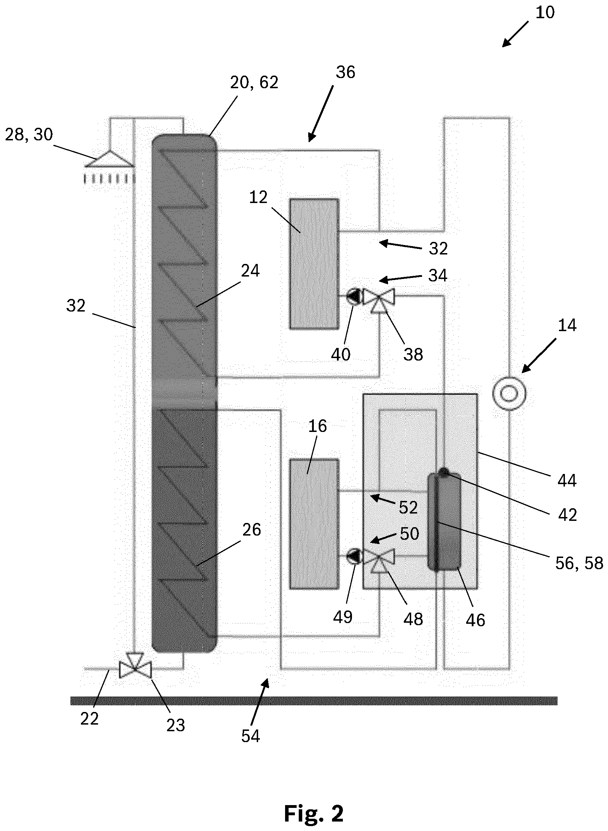

Das erfindungsgemäße Heizsystem 10 zeichnet sich nun vor allem dadurch aus, dass ein Temperatursensor 42 an der mindestens einen hydraulischen Weiche 18 angeordnet ist. Fig. 2 zeigt entsprechend eine schematische Darstellung eines Ausführungsbeispiels eines entsprechenden Heizsystems 10 mit einem Modul 44 zur Einbindung des Fremdwärmeerzeugers 16.

Das Modul 44 weist dabei eine hydraulische Weiche 46 auf, über welche der Fremdwärmeerzeuger 16 mit dem Heizkreis 14 gekoppelt ist. Der Temperatursensor 42 ist dabei bezogen auf eine Strömung im Heizkreis 14 an der stromabwärtigen Seite der hydraulischen Weiche 46 angeordnet. Alternativ wäre es aber auch denkbar, dass der Temperatursensor 42 in der hydraulischen Weiche angeordnet ist.

Das in dem Ausführungsbeispiel aus Fig. 2 gezeigte Modul 44 weist darüber hinaus ein weiteres Drei-Wege-Ventil 48 in einem Rücklauf 50 des Fremdwärmeerzeugers 16 auf. Alternativ ist es auch Denkbar, dass das Drei-Wege-Ventil 48 in einem Vorlauf 52 des Fremdwärmeerzeugers 16 angeordnet ist.

In dem Rücklauf 50 des Fremdwärmeerzeugers 16 ist auch ein weiterer Verdichter 49 angeordnet. In dem gezeigten Ausführungsbeispiel ist der Verdichter 49 außerhalb des Moduls 44 angeordnet, es wäre aber alternativ auch denkbar, dass der Verdichter 49 innerhalb des Moduls 44 angeordnet ist.

Das Drei-Wege-Ventil 48 ist dazu vorgesehen zwischen einer Erwärmung des mindestens einen Heizkreises 14 und einer Erwärmung von Brauchwasser umzusteuern, wodurch die von dem Fremdwärmeerzeuger 16 erzeugte Wärme sowohl für die Erwärmung von Brauchwasser als auch für den Heizkreis 14 genutzt werden kann.

Der Fremdwärmeerzeuger 16 ist für die Erwärmung von Brauchwasser über den Vorlauf 52 und dem Rücklauf 50 mit einem weiteren Brauchwassererwärmungskreis 54 verbunden. So ist der weitere Brauchwassererwärmungskreis 54 dem Fremdwärmeerzeuger 16 zugeordnet. Entsprechend kann nicht nur das Brauchwasser zusätzlich erwärmt werden, es kann auch Wärme die im Fremdwärmeerzeuger 16 erzeugt wird im Pufferspeicher 20 zwischengespeichert werden.

In dem in Fig. 2 gezeigten Heizsystem 10 weist die hydraulische Weiche 46 einen integrierten Wärmeübertrager 56 auf. In dem Ausführungsbeispiel handelt es sich dabei um einen Rohrwärmeübertrager 58.

Die hydraulische Weiche 46, bzw. der integrierte Wärmeübertrager 56, ist mit dem Brauchwassererwärmungskreis 54 verbunden. In dem gezeigten Fall ist der integrierte Wärmeübertrager 56 über den Vorlauf 52 mit dem Brauchwassererwärmungskreis 54 verbunden. So kann der integrierte Wärmeübertrager 56 auch als ein Bestandteil des Brauchwassererwärmungskreises aufgefasst werden. Dadurch wird eine verbesserte Kopplung des Fremdwärmeerzeugers 16 an den Heizkreis 14 und auch an den Brauchwassererwärmungskreis 54 ermöglicht.

Der Fremdwärmeerzeuger 16 ist derart mit der hydraulischen Weiche 46 verbunden, dass mindestens ein Medium des Brauchwassererwärmungskreises 54 durch die hydraulische Weiche 46, bzw. durch den integrierten Wärmetauscher 56, geleitet wird, wodurch eine besonders effiziente Wärmeübertragung zwischen dem Brauchwassererwärmungskreis 54 und der hydraulischen Weiche 46 ermöglicht wird.

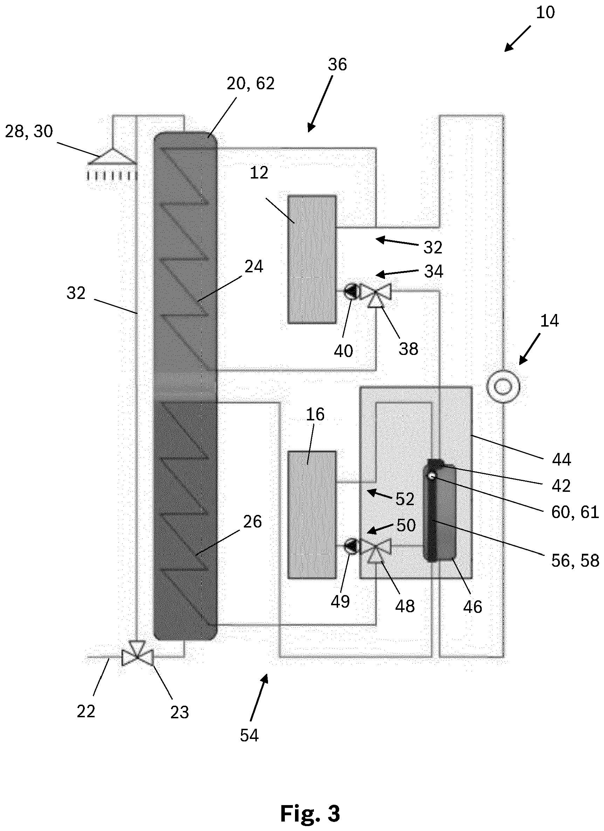

In Fig. 3 ist eine schematische Darstellung eines weiteren Ausführungsbeispiels eines Heizsystems 10 mit einem Modul 44 zur Einbindung des Fremdwärmeerzeugers 16 gezeigt. Erfindungsgemäß ist der integrierte Wärmeübertrager 56 bzw. Rohrwärmeübertrager 58 mit dem Inneren der hydraulischen Weiche 46 über eine Öffnung 60 an dem integrierten Wärmeübertrager 56 hydraulisch verbunden, wodurch ein Austausch von Heizmedium zwischen dem Brauchwassererwärmungskreis 54 und dem Heizkreis 14 ermöglicht wird. So muss, wie in dem Ausführungsbeispiel dargestellt, der Vorlauf des Fremdwärmeerzeugers nicht mehr direkt mit dem Inneren der hydraulischen Weiche 46 verbunden sein, damit erwärmtes Heizwasser aus dem Fremdwärmeerzeuger in die hydraulische Weiche fließen kann. Durch die Öffnung 60 im integrierten Wärmeübertrager 56 reicht es aus, den Vorlauf 52 des Fremdwärmeerzeugers 16 lediglich mit dem integrierten Wärmeübertrager 56 der hydraulischen Weiche 46 zu verbinden, wodurch Materialkosten bei der Installation des Heizsystems 10 gespart werden.

Bei der Öffnung 60 in dem integrierten Wärmeübertrager 56 handelt es sich um ein Loch 61 im Rohrwärmeübertrager 58. Je nach Position des Drei-Wege-Ventils fließt das Medium des Brauchwassererwärmungskreises entweder durch den Rohrwärmeübertrager 58 zum zweiten Wärmetauscher 26 im Brauchwasserspeicher 62, bzw. Pufferspeicher 20, oder durch die Öffnung 60, bzw. das Loch 61, in das Innere der hydraulischen Weiche 46 zum Heizkreis.

Des Weiteren betrifft die Erfindung auch ein Verfahren zum Betreiben eines Heizsystems 10. Das Verfahren zeichnet sich dadurch aus, dass eine Temperatur an der mindestens einen hydraulischen Weiche 46 erfasst wird. In den in Fig. 2 und Fig. 3 gezeigten Ausführungsbeispielen wird die Temperatur mittels des Temperatursensors 42 erfasst. Dies ermöglicht eine Temperaturmessung unmittelbar an der hydraulischen Weiche 46, wodurch wiederum ermittelt werden kann ob eine Wärmeanforderung an das Heizsystem 10 gestellt wird.

In den gezeigten Ausführungsbeispielen wird eine Temperaturänderung an der hydraulischen Weiche 46 erfasst, wodurch das Temperaturverhalten der hydraulischen Weiche 46 besonders effektiv beobachtet werden kann.

Wird kein Temperaturanstieg oder eine Temperabsenkung erfasst, so wird dies als eine Wärmeabnahme am Heizkreis 14 interpretiert. Dies liegt insbesondere dann vor, wenn ein Volumenstrom im Heizkreis 14 und damit auch im Inneren der hydraulischen Weiche 46 vorliegt.

Kommt es jedoch zu einem Temperaturanstieg, so wird dies derart interpretiert, dass keine Wärmeabnahme im Heizkreis 14 erfolgt. Entsprechend gibt es keinen Volumenstrom im Heizkreis 14 und im Inneren der hydraulischen Weiche 46, wodurch sich die hydraulische Weiche 46 erwärmt.

Weitestgehend getrennt von dem Heizwasser des Heizkreises 14 im Inneren der hydraulischen Weiche 46, wird ein Medium des Brauchwassererwärmungskreises 54 durch die hydraulische Weiche 46 bzw. durch den integrierten Wärmetauscher 56 geleitet, wodurch ein effizienter Wärmeaustausch zwischen dem Fremdwärmeerzeuger 16, bzw. dem Medium des Brauchwassererwärmungskreises 54 kommend aus dem Fremdwärmeerzeuger 16, und dem Heizwasser des Heizkreises 14 im Inneren der hydraulischen Weiche 46 ermöglicht wird.

In den gezeigten Ausführungsbeispielen wird oder bleibt ein einer Erwärmung von Brauchwasser entsprechender Betrieb eingestellt, wenn ein Temperaturanstieg an der mindestens einen hydraulischen Weiche 46 erfasst wird, d.h. wenn keine Wärmeanforderung an den Heizkreis 14 gestellt wird, und die Rücklauftemperatur des Heizkreises 14 betragsmäßig größer ist als die Speichertemperatur des Brauchwasserspeichers 62 bzw. des Pufferspeichers 20.

Der einer Erwärmung des Brauchwassers entsprechende Betrieb wird mittels des Drei-Wege-Ventils 48 eingestellt, indem lediglich der Rückfluss des Mediums aus dem Brauchwassererwärmungskreis 54 erlaubt wird.

Wird oder bleibt nun der einer Erwärmung von Brauchwasser entsprechender Betrieb eingestellt, wenn ein Temperaturanstieg an der mindestens einen hydraulischen Weiche 46 erfasst wird, d.h. wenn keine Wärmeanforderung an den Heizkreis 14 gestellt wird, und die Rücklauftemperatur des Heizkreises 14 betragsmäßig größer ist als die Speichertemperatur des Brauchwasserspeichers 62 bzw. des Pufferspeichers 20, so erfolgt das Umschalten des Drei-Wege-Ventils 48 besonders effizient und robust, da ein häufiges Umschalten des Drei-Wege-Ventils 48 vermieden wird.

Weiter wird oder bleibt der einer Erwärmung von Brauchwasser entsprechende Betrieb eingestellt, wenn der Temperaturwert an der hydraulischen Weiche 64 betragsmäßig größer ist als ein Grenzwert von 42 °C, wodurch sicher gestellt wird, dass die hydraulische Weiche 56 nicht Überhitzt.

Des Weiteren wird oder bleibt ein einer Erwärmung von Heizwasser entsprechender Betrieb eingestellt, wenn eine Temperatursenkung an der hydraulischen Weiche 56 erfasst wird und die Rücklauftemperatur des Heizkreises 14 betragsmäßig kleiner ist als mindestens die Speichertemperatur des Brauchwasserspeichers 62 bzw. des Pufferspeichers 20.

Wird oder bleibt nun ein einer Erwärmung von Heizwasser entsprechender Betrieb eingestellt, wenn eine Temperatursenkung an der hydraulischen Weiche 56 erfasst wird und die Rücklauftemperatur des Heizkreises 14 betragsmäßig kleiner ist als mindestens die Speichertemperatur des Brauchwasserspeichers 62 bzw. des Pufferspeichers 20, so erfolgt auch hier das Umschalten des Drei-Wege-Ventils 48 besonders effizient und robust, da ein häufiges Umschalten des Drei-Wege-Ventils 48 vermieden wird.

Der einer Erwärmung von Heizwasser des Heizkreises 14 entsprechende Betrieb wird ebenfalls mittels des Drei-Wege-Ventils 48 eingestellt, indem lediglich der Rückfluss des Heizwassers aus dem Heizkreis 14 erlaubt wird.

Weiter wird oder bleibt der einer Erwärmung von Heizwasser entsprechende Betrieb eingestellt, wenn der Temperaturwert betragsmäßig kleiner oder gleich dem Grenzwert von 42 °C ist, wodurch sicher gestellt wird, dass die hydraulische Weiche 56 nicht zu sehr auskühlt.

Die Regelung und Steuerung, wie beispielsweise der Drei-Wege-Ventile 23, 38, 48 und der Verdichter 40, 49, des Heizsystems 10, sowie die Auswertung von Messgrößen, wie der Temperaturmessung mittels des Temperatursensors 42 an der hydraulischen Weiche, werden durch eine Steuereinheit, welche für eine verbesserte Darstellung nicht bildlich dargestellt ist, vorgenommen. Alternativ wäre es aber auch denkbar mehrere Steuereinheiten zu verwenden. Beispielsweise könnte die Steuereinheit auch in das Modul 44 integriert sein.

## Patentansprüche

1. Heizsystem (10), welches mindestens einen Primärwärmeerzeuger (12), mindestens einen Heizkreis (14) und mindestens einen Fremdwärmeerzeuger (16) umfasst, wobei der mindestens eine Fremdwärmeerzeuger (16) über mindestens eine hydraulische Weiche (18, 46) mit dem mindestens einen Heizkreis (14) gekoppelt ist, wobei mindestens ein Temperatursensor (42) in und/oder an der mindestens einen hydraulischen Weiche (18, 46) angeordnet ist, **dadurch gekennzeichnet, dass** die hydraulische Weiche (18, 46) mindestens einen integrierten Wärmeübertrager (56) aufweist, wobei der integrierte Wärmeübertrager (56) mit der mindestens einen hydraulischen Weiche (18, 46) über mindestens eine Öffnung (60), an dem mindestens einen integrierten Wärmeübertrager (56), hydraulisch verbunden ist.

2. Heizsystem (10) nach Anspruch 1, **dadurch gekennzeichnet, dass** der mindestens eine Temperatursensor (42) bezogen auf eine Strömung im Heizkreis in und/oder an einer stromabwärtigen Seite der mindestens einen hydraulischen Weiche (18, 46) angeordnet ist.

3. Heizsystem (10) nach einem der Ansprüche 1 oder 2, **dadurch gekennzeichnet, dass** mindestens ein Drei-Wege-Ventil (48), insbesondere in mindestens einem Vor- und/oder Rücklauf (50, 52), angeordnet ist, welches dazu vorgesehen ist zwischen einer Erwärmung des mindestens einen Heizkreises (14), insbesondere über die mindestens eine Weiche (18, 46), und einer Erwärmung von Brauchwasser umzusteuern.

4. Heizsystem (10) nach einem der Ansprüche 1 bis 3, **dadurch gekennzeichnet, dass** der mindestens eine Fremdwärmeerzeuger (16) mit mindestens einem Brauchwassererwärmungskreis (54), insbesondere über mindestens einen Vor- und/oder Rücklauf (50, 52), verbunden ist.

5. Heizsystem (10) nach einem der Ansprüche 1 bis 4, **dadurch gekennzeichnet, dass** die mindestens eine hydraulische Weiche (18, 46), insbesondere der mindestens eine integrierte Wärmeübertrager (56), mit dem mindestens einen Brauchwassererwärmungskreis (54), insbesondere über mindestens einen Vor- und/oder Rücklauf (50, 52) des mindestens einen Brauchwassererwärmungskreises (54), verbunden ist.

6. Heizsystem (10) nach einem der Ansprüche 1 bis 5, **dadurch gekennzeichnet, dass** der mindestens eine Fremdwärmeerzeuger (16) so mit der mindestens einen hydraulischen Weiche (18, 46) verbunden ist, dass mindestens ein Medium des mindestens einen Brauchwassererwärmungskreises (54) durch die mindestens eine hydraulische Weiche (18, 46) und/oder durch den mindestens einen integrierten Wärmeübertrager (56) geleitet werden kann.

7. Verfahren zum Betreiben eines Heizsystems (10), insbesondere eines Heizsystems (10) nach einem der Ansprüche 1 bis 6, welches mindestens einen Primärwärmeerzeuger (12), mindestens einen Heizkreis (14) und mindestens einen Fremdwärmeerzeuger (16) umfasst, wobei der mindestens eine Fremdwärmeerzeuger (16) über mindestens eine hydraulische Weiche (18, 46) mit dem mindestens einen Heizkreis gekoppelt ist, wobei mindestens eine Temperatur in und/oder an der mindestens einen hydraulischen Weiche (18, 46) erfasst wird, **dadurch gekennzeichnet, dass** die hydraulische Weiche (18, 46) mindestens einen integrierten Wärmeübertrager (56) aufweist, wobei über eine Öffnung (60) an dem integrierten Wärmeübertrager (56) ein Austausch von Heizmedium zwischen einem Brauchwassererwärmungskreis 54 und dem Heizkreis 14 durchgeführt wird.

8. Verfahren zum Betreiben eines Heizsystems (10) nach Anspruch 7, **dadurch gekennzeichnet, dass** mindestens eine Temperaturänderung in und/oder an der mindestens einen hydraulischen Weiche (18, 46) erfasst wird.

9. Verfahren zum Betreiben eines Heizsystems (10) nach einem der Ansprüche 7 und 8, **dadurch gekennzeichnet, dass** mindestens ein Medium eines Brauchwassererwärmungskreises (54) durch die mindestens eine hydraulische Weiche (18, 46) und/oder durch mindestens einen integrierten Wärmeübertrager (56) geleitet wird.

10. Verfahren zum Betreiben eines Heizsystems (10) nach einem der Ansprüche 7 bis 9, **dadurch gekennzeichnet, dass** ein einer Erwärmung von Brauchwasser entsprechender Betrieb eingestellt wird oder eingestellt bleibt, wenn ein Temperaturanstieg in und/oder an der mindestens einen hydraulischen Weiche (18, 46) erfasst wird und/oder der mindestens eine Temperaturwert betragsmäßig größer ist als mindestens ein Grenzwert, insbesondere von 42 °C, und/oder mindestens eine Rücklauftemperatur des Heizkreises (14) betragsmäßig größer ist als mindestens eine Speichertemperatur eines Brauchwasserspeichers (62).

11. Verfahren zum Betreiben eines Heizsystems (10) nach einem der Ansprüche 7 bis 10, **dadurch gekennzeichnet, dass** ein einer Erwärmung von Heizwasser entsprechender Betrieb eingestellt wird oder eingestellt bleibt, wenn eine Temperatursenkung in und/oder an der mindestens einen hydraulischen Weiche (18, 46) erfasst wird und/oder der mindestens eine Temperaturwert betragsmäßig kleiner oder gleich mindestens einem Grenzwert, insbesondere von 42 °C, ist und/oder mindestens eine Rücklauftemperatur des Heizkreises (14) betragsmäßig kleiner ist als mindestens eine Speichertemperatur eines Brauchwasserspeichers (62).

12. Verfahren zum Betreiben eines Heizsystems (10) nach einem der Ansprüche 7 bis11, **dadurch gekennzeichnet, dass** ein einer Erwärmung von Brauchwasser entsprechender Betrieb und/oder ein einer Erwärmung von Heizwasser entsprechender Betrieb mittels eines Drei-Wege-Ventils (48), insbesondere in einem Vor- und/oder Rücklauf (50, 52), eingestellt wird.

## Claims

1. Heating system (10) which comprises at least one primary heat generator (12), at least one heating circuit (14) and at least one external heat generator (16), wherein the at least one external heat generator (16) is coupled to the at least one heating circuit (14) via at least one hydraulic switch (18, 46), wherein at least one temperature sensor (42) is arranged in and/or on the at least one hydraulic switch (18, 46), **characterized in that** the hydraulic switch (18, 46) has at least one integrated heat exchanger (56), wherein the integrated heat exchanger (56) is hydraulically connected to the at least one hydraulic switch (18, 46) via at least one opening (60) on the at least one integrated heat exchanger (56).

2. Heating system (10) according to Claim 1, **characterized in that** the at least one temperature sensor (42) is arranged in and/or on a downstream side of the at least one hydraulic switch (18, 46) in relation to a flow in the heating circuit.

3. Heating system (10) according to either of Claims 1 and 2, **characterized in that** at least one three-way valve (48) is arranged in particular in at least one supply and/or return line (50, 52) and is intended for changing over between heating of the at least one heating circuit (14), in particular via the at least one switch (18, 46), and heating of service water.

4. Heating system (10) according to one of Claims 1 to 3, **characterized in that** the at least one external heat generator (16) is connected to at least one service-water heating circuit (54), in particular via at least one supply and/or return line (50, 52).

5. Heating system (10) according to one of Claims 1 to 4, **characterized in that** the at least one hydraulic switch (18, 46), in particular the at least one integrated heat exchanger (56), is connected to the at least one service-water heating circuit (54), in particular via at least one supply and/or return line (50 ,52) of the at least one service-water heating circuit (54).

6. Heating system (10) according to one of Claims 1 to 5, **characterized in that** the at least one external heat generator (16) is connected to the at least one hydraulic switch (18, 46) such that at least one medium of the at least one service-water heating circuit (54) is able to be guided through the at least one hydraulic switch (18, 46) and/or through the at least one integrated heat exchanger (56).

7. Method for operating a heating system (10), in particular a heating system (10) according to one of Claims 1 to 6, which comprises at least one primary heat generator (12), at least one heating circuit (14) and at least one external heat generator (16), wherein the at least one external heat generator (16) is coupled to the at least one heating circuit via at least one hydraulic switch (18, 46), wherein at least one temperature in and/or on the at least one hydraulic switch (18, 46) is detected, **characterized in that** the hydraulic switch (18, 46) has at least one integrated heat exchanger (56), wherein an exchange of heating medium between a service-water heating circuit (54) and the heating circuit (14) is carried out via an opening (60) on the integrated heat exchanger (56).

8. Method for operating a heating system (10) according to Claim 7, **characterized in that** at least one temperature change in and/or on the at least one hydraulic switch (18, 46) is detected.

9. Method for operating a heating system (10) according to either of Claims 7 and 8, **characterized in that** at least one medium of a service-water heating circuit (54) is guided through the at least one hydraulic switch (18, 46) and/or through at least one integrated heat exchanger (56).

10. Method for operating a heating system (10) according to one of Claims 7 to 9, **characterized in that** an operation which corresponds to heating of service water is set, or remains set, if a temperature increase in and/or on the at least one hydraulic switch (18, 46) is detected, and/or the at least one temperature value is larger in magnitude than at least one limit value, in particular of 42°C, and/or at least one return line temperature of the heating circuit (14) is larger in magnitude than at least one storage temperature of a service-water storage unit (62).

11. Method for operating a heating system (10) according to one of Claims 7 to 10, **characterized in that** an operation which corresponds to heating of heating water is set, or remains set, if a temperature decrease in and/or on the at least one hydraulic switch (18, 46) is detected, and/or the at least one temperature value is smaller in magnitude than or equal in magnitude to at least one limit value, in particular of 42°C, and/or at least one return line temperature of the heating circuit (14) is smaller in magnitude than at least one storage temperature of a service-water storage unit (62).

12. Method for operating a heating system (10) according to one of Claims 7 to 11, **characterized in that** an operation which corresponds to heating of service water and/or an operation which corresponds to heating of heating water is set by means of a three-way valve (48) which is in particular in a supply and/or return line (50, 52).

## Revendications

1. Système de chauffage (10) qui comporte au moins un producteur primaire de chaleur (12), au moins un circuit de chauffage (14) et au moins un producteur externe de chaleur (16),
le ou les producteurs extérieurs de chaleur (16) étant raccordés au circuit ou aux circuits de chauffage (14) par au moins une ramification hydraulique (18, 46),
au moins un capteur de température (42) étant disposé dans et/ou sur la ou les ramifications hydrauliques (18, 46),
**caractérisé en ce que**
la ramification hydraulique (18, 46) présente au moins un échangeur de chaleur (56) intégré,
**en ce que** l'échangeur de chaleur (56) intégré est relié hydrauliquement à la ou aux ramifications hydrauliques (18, 46) par l'intermédiaire d'au moins une ouverture (60) prévue sur le ou les échangeurs de chaleur intégrés (56).

2. Système de chauffage (10) selon la revendication 1, **caractérisé en ce que** le ou les capteurs de température (42) sont disposés dans et/ou sur un côté aval dans la direction d'écoulement du circuit de chauffage de la ou des ramifications hydrauliques (18, 46).

3. Système de chauffage (10) selon l'une des revendications 1 ou 2, **caractérisé en ce qu'**au moins une vanne trois voies (48) est disposée en particulier dans au moins un conduit de départ et/ou un conduit de retour (50, 52) et est prévue entre un chauffage du ou des circuits de chauffage (14) et un chauffage de l'eau sanitaire, en particulier par l'intermédiaire de la ou des ramifications (18, 46).

4. Système de chauffage (10) selon l'une des revendications 1 à 3, **caractérisé en ce que** le ou les producteurs extérieurs de chaleur (16) sont reliés à au moins un circuit (54) de chauffage d'eau sanitaire, en particulier par l'intermédiaire d'au moins un conduit de départ et/ou un conduit de retour (50, 52).

5. Système de chauffage (10) selon l'une des revendications 1 à 4, **caractérisé en ce que** la ou les ramifications hydrauliques (18, 46), en particulier le ou les échangeurs de chaleur (56) intégrés sont reliés au circuit ou aux circuits (54) de chauffage d'eau sanitaire, en particulier par au moins un conduit de départ et/ou un conduit de retour (50, 52) du ou des circuits (54) de chauffage d'eau sanitaire.

6. Système de chauffage (10) selon l'une des revendications 1 à 5, **caractérisé en ce que** le ou les producteurs externes de chaleur (16) sont reliés à la ou aux ramifications hydrauliques (18, 46) de telle sorte qu'au moins un fluide du ou des circuits (54) de chauffage d'eau sanitaire puisse être conduit par la ou les ramifications hydrauliques (18, 46) et/ou par le ou les échangeurs de chaleur intégrés (56).

7. Procédé de conduite d'un système de chauffage (10), en particulier d'un système de chauffage (10) selon l'une des revendications 1 à 6, qui comporte au moins un producteur primaire de chaleur (12), au moins un circuit de chauffage (14) et au moins un producteur externe de chaleur (16),
le ou les producteurs extérieurs de chaleur (16) étant raccordés au circuit ou aux circuits de chauffage par au moins une ramification hydraulique (18, 46),
au moins une température étant saisie dans et/ou sur la ou les ramifications hydrauliques (18, 46), **caractérisé en ce que**
la ramification hydraulique (18, 46) présente au moins un échangeur de chaleur (56) intégré et
**en ce qu'**un échange de fluide de chauffage entre le circuit (54) de chauffage d'eau sanitaire et le circuit de chauffage (14) est réalisé par l'intermédiaire d'une ouverture (60) prévue sur l'échangeur de chaleur intégré (56).

8. Procédé de conduite d'un système de chauffage (10) selon la revendication 7, **caractérisé en ce qu'**au moins une modification de température dans et/ou sur la ou les ramifications hydrauliques (18, 46) est saisie.

9. Procédé de conduite d'un système de chauffage (10) selon l'une des revendications 7 et 8, **caractérisé en ce qu'**au moins un fluide d'un circuit (54) de chauffage d'eau sanitaire est conduit par la ou les ramifications hydrauliques (18, 46) et/ou par le ou les échangeurs de chaleur intégrés (56).

10. Procédé de conduite d'un système de chauffage (10) selon l'une des revendications 7 à 9, **caractérisé en ce qu'**un fonctionnement qui correspond à un chauffage de l'eau chaude est établi ou reste établi lorsqu'une augmentation de température dans et/ou sur la ou les ramifications hydrauliques (18, 46) est saisie et/ou lorsque le niveau de la ou des valeurs de température est supérieur à au moins une valeur limite, en particulier de 42°C, et/ou si le niveau d'au moins une température de retour du circuit de chauffage (14) est supérieur à au moins un température d'une réserve (62) d'eau sanitaire.

11. Procédé de conduite d'un système de chauffage (10) selon l'une des revendications 7 à 10, **caractérisé en ce qu'**un fonctionnement qui correspond à un chauffage de l'eau de chauffage est établi ou reste établi si une diminution de température dans et/ou sur la ou les ramifications hydrauliques (18, 46) est saisie et/ou lorsque le niveau de la ou des valeurs de température est inférieur ou égal à au moins une valeur limite, en particulier de 42°C, et/ou si le niveau d'au moins une température de retour du circuit de chauffage (14) est inférieur à au moins un température d'une réserve (62) d'eau sanitaire.

12. Procédé de conduite d'un système de chauffage (10) selon l'une des revendications 7 à 11, **caractérisé en ce qu'**un fonctionnement qui correspond au chauffage de l'eau sanitaire et/ou un fonctionnement qui correspond à un chauffage de l'eau de chauffage est établi au moyen d'une vanne trois voies (48) prévue en particulier sur le départ et/ou le retour (50, 52).
